(19) **Europäisches Patentamt / European Patent Office / Office européen des brevets**

(11) **EP 4 765 376 A1**

(12) **EUROPEAN PATENT APPLICATION**
published in accordance with Art. 153(4) EPC

(43) Date of publication:
**24.06.2026 Bulletin 2026/26**

(21) Application number: **25774790.7**

(22) Date of filing: **18.03.2025**

(51) International Patent Classification (IPC):
**H01M 50/133** (2021.01)   **H01M 50/126** (2021.01)
**H01M 50/124** (2021.01)   **H01M 50/105** (2021.01)
**H01M 50/121** (2021.01)   **H01M 50/119** (2021.01)
**H01M 50/136** (2021.01)   **H01M 50/145** (2021.01)
**H01M 50/131** (2021.01)

(52) Cooperative Patent Classification (CPC):
**H01M 50/105; H01M 50/119; H01M 50/121;
H01M 50/124; H01M 50/126; H01M 50/131;
H01M 50/133; H01M 50/136; H01M 50/145;**
Y02E 60/10

(86) International application number:
**PCT/KR2025/003533**

(87) International publication number:
**WO 2025/198318 (25.09.2025 Gazette 2025/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 18.03.2024  KR 20240037462
18.03.2024  KR 20240037463
24.12.2024  KR 20240196382
17.03.2025  KR 20250034243

(71) Applicant: **LG Energy Solution, Ltd.**
**Seoul 07335 (KR)**

(72) Inventors:
• **LEE, Wan Soo**
 **Daejeon 34122 (KR)**
• **YU, Hyung Kyun**
 **Daejeon 34122 (KR)**
• **PARK, Eun Suk**
 **Daejeon 34122 (KR)**
• **JU, Hye Yeong**
 **Daejeon 34122 (KR)**

(74) Representative: **Plasseraud IP**
**104 Rue de Richelieu**
**CS92104**
**75080 Paris Cedex 02 (FR)**

(54) **POUCH FILM LAMINATE, POUCH-TYPE BATTERY CASE, AND POUCH-TYPE SECONDARY BATTERY**

(57)    The present invention relates to a pouch film laminate including a substrate layer, a gas barrier layer, and a sealant layer laminated in sequence, wherein the substrate layer includes a surface protection layer, and a ratio of a thickness of the pouch film laminate to a thickness of the surface protection layer is 6 to 10.

[FIG. 1]

100

EP 4 765 376 A1

Description

## TECHNICAL FIELD

### Cross-reference to Related Applications

This application claims priority from Korean Patent Application Nos. 10-2024-0037462, filed on March 18, 2024, 10-2024-0037463, filed on March 18, 2024, 10-2024-0196382, filed on December 24, 2024, and 10-2025-0034243, filed on March 17, 2025, the disclosures of which are incorporated by reference herein.

### Technical Field

The present invention relates to a pouch film laminate, a pouch-type battery case, and a pouch-type secondary battery.

## BACKGROUND ART

Secondary batteries are used in various fields ranging from small-size products, including a digital camera, a P-DVD, an MP3P, a mobile phone, a PDA, a portable game device, a power tool, and an e-bike, to large-size products requiring high capacity, including an electric vehicle or a hybrid vehicle, and power storage devices for storing surplus power or new renewable energy and power storage devices for back-up. The type of the secondary battery includes a nickel cadmium battery, a nickel hydrogen battery, a lithium-ion battery, a lithium-ion polymer battery, and the like.

The secondary battery may be prepared in a way that an electrode assembly, in which a positive electrode, a negative electrode, and a separator disposed therebetween are alternately stacked, is accommodated in a battery case, and an electrolyte is injected thereto, and then the battery case is sealed. The secondary battery is classified into a pouch type and a can type according to a material of the case accommodating the electrode assembly.

A pouch, which is a case of the pouch-type secondary battery, is prepared in a way that a press processing is performed on a pouch film laminate having flexibility to form a cup part. Then, once the cup part is formed, the electrode assembly is accommodated in an accommodating space of the cup part, and a sealing part is sealed to prepare the secondary battery.

In this press processing, drawing is performed by inserting the pouch film laminate into a press equipment, and applying pressure to the pouch film laminate with a punch to stretch out the pouch film laminate. At this time, the pouch film laminate is formed by laminating a plurality of layers such as a substrate layer, a gas barrier layer, a sealant layer, etc. in sequence.

Such multi-layer structure has a significant impact on stability, sealing property, and formability of the secondary battery when the pouch film laminate is prepared into a pouch-type secondary battery case later, and in particular, the structure has a significant impact on forming the cup part in a larger depth in order to achieve high energy density.

Meanwhile, in a conventional art, there have been attempts to form a cup part of the pouch-type case in a large depth only by controlling the thickness and property of a nylon film that assists stretching, or an aluminum alloy thin film used for a gas barrier layer, but since the problem with layers in the pouch film laminate organically combined and moving were not taken into consideration, there were limitations in achieving excellent formability and robustness.

Therefore, the present invention is to provide a pouch film laminate capable of providing more excellent formability and robustness by considering the thickness ratio between the layers in the pouch film laminate, etc., in addition to the thickness and property of a stretching auxiliary layer or gas barrier layer.

## DISCLOSURE OF THE INVENTION

### TECHNICAL PROBLEM

The present invention is to solve the above problem, and is to provide a pouch film laminate having excellent formability and robustness by controlling the thickness ratio of the pouch film laminate to a surface protection layer in a particular range, and to provide a pouch-type battery case and a pouch-type secondary battery.

Tasks of the present invention are not limited to the task mentioned above, and other tasks not mentioned herein may be clearly understood by those skilled in the art from the description below.

### TECHNICAL SOLUTION

EP 4 765 376 A1

[1] The present invention provides a pouch film laminate including a substrate layer, a gas barrier layer, and a sealant layer laminated in sequence, wherein the substrate layer includes a surface protection layer, and a ratio of a thickness of the pouch film laminate to a thickness of the surface protection layer is 6 to 10.

[2] In the present invention of [1] above, the substrate layer may have a thickness of 45 $\mu$m to 70 $\mu$m.

[3] In the present invention of [1] or [2] above, the thickness of the surface protection layer may be 10 $\mu$m to 35 $\mu$m.

[4] In the present invention of at least one of [1] to [3] above, the surface protection layer may have a maximum peak temperature of 253 °C or less in a differential scanning calorimetry (DSC) analysis graph obtained by heating from 25 °C to 350 °C at a temperature increase rate of 10 °C /min.

[5] In the present invention of at least one of [1] to [4] above, the surface protection layer may have a friction coefficient of 0.3 or less measured at a temperature of 25 °C.

[6] In the present invention of at least one of [1] to [5] above, the substrate layer may further include a stretching auxiliary layer, and the stretching auxiliary layer may have a thickness of 20 $\mu$m to 45 $\mu$m.

[7] In the present invention of at least one of [1] to [6] above, the gas barrier layer may have a thickness of 70 $\mu$m to 90 $\mu$m.

[8] In the present invention of at least one of [1] to [7] above, the sealant layer may have a thickness of 70 $\mu$m to 90 $\mu$m.

[9] In the present invention of at least one of [1] to [8] above, the sealant layer may include a first sealant layer disposed in contact with the gas barrier layer, a second sealant layer laminated on the first sealant layer, and a third sealant layer laminated on the second sealant layer.

[10] In the present invention of at least one of [1] to [9] above, the thickness of the pouch film laminate may be 120 $\mu$m to 300 $\mu$m.

[11] In the present invention of at least one of [1] to [10] above, a ratio of a thickness of the gas barrier layer to a thickness of the surface protection layer may be 2.5 to 3.3.

[12] In the present invention of at least one of [1] to [11] above, a ratio of a thickness of the gas barrier layer to a thickness of the substrate layer may be 1.4 to 1.8.

[13] In the present invention of at least one of [1] to [12] above, the substrate layer may further include a stretching auxiliary layer, and a ratio of a thickness of the stretching auxiliary layer to a thickness of the surface protection layer may be 1.2 or less.

[14] The present invention provides a pouch-type battery case prepared by performing a drawing on the pouch film laminate of at least one of [1] to [13] above.

[15] The present invention provides a pouch-type secondary battery including the pouch-type battery case of [14] above.

## ADVANTAGEOUS EFFECTS

A pouch film laminate according to the present invention is characterized by having excellent residual rate of a gas barrier layer as well as preventing the problems of punctures or damages, occurring when the pouch film laminate is formed, by controlling the thickness ratio of the pouch film laminate to a surface protection layer in a particular range. Accordingly, excellent robustness may be achieved, while max forming depth is excellent, in the forming of the pouch film laminate.

## BRIEF DESCRIPTION OF THE DRAWINGS

The drawings accompanied in the specification illustrates preferred embodiments of the present invention, and serve to better understand the technical idea of the present invention together with the content of the present invention previously described, and therefore, the present invention is not to be construed as limited to only the matters described in the drawings.

FIG. 1 is a cross-sectional view of a pouch film laminate according to the present invention.
FIG. 2 is an exploded diagram of a pouch-type secondary battery according to the present invention.
FIG. 3 is a schematic diagram illustrating an edge and corner of a pouch-type battery case according to the present invention.
FIG. 4 is a drawing showing a location to cut in a pouch-type battery case for evaluating robustness according to Experimental Example 4.
FIG. 5 is a drawing illustrating one example of a cut sample according to Experimental Example 4.
FIG. 6 is a drawing illustrating one example of a cross-section of a cut sample according to Experimental Example 4.

## MODE FOR CARRYING OUT THE INVENTION

The advantages and features of the present invention and methods of achieving them may become clear by referring to the embodiments described in detail below with the accompanying drawings. The present invention, however, is not limited to the embodiments disclosed below, but may be implemented in various different forms, the present embodiments are merely provided to ensure that the disclosure of the present invention is complete and to fully inform those of ordinary skill in the art to which the present invention pertains, and the present invention is only defined by the scope of the claims. Like reference symbols or numerals refer to the same components throughout the specification.

Unless otherwise defined, all terms (including technical and scientific terms) used in this specification may be used with meanings that can be commonly understood by those skilled in the art to which the present invention belongs. Also, terms defined in commonly used dictionaries are not to be interpreted ideally or excessively unless clearly specifically defined.

The terminology used herein is for describing embodiments and is not intended to limit the present invention. In this specification, the singular forms are intended to include the plural forms as well, unless the context clearly indicates otherwise. The terms "comprises" and/or "comprising" used in this specification do not exclude the presence or addition of one or more other components other than the components stated.

In this specification, when a part includes a component, this does not mean that other components are excluded, but that it may further include other components unless specifically stated to the contrary.

In this specification, the term "A and/or B" means A or B, or A and B.

In this specification, "%" refers to wt% unless otherwise indicated.

In this specification, a MD direction (machine direction) refers to a length direction of a pouch film laminate, and a TD direction (transverse direction) refers to a width direction of the pouch film laminate.

In this specification, a tensile strength (N/15 mm) of each of a surface protection layer and a stretching auxiliary layer in the MD direction may be measured in a way that each of the surface protection layer and the stretching auxiliary layer is cut out into a length (MD direction) x width (TD direction) of 120 mm x 15 mm, then the cut-out is fixed to a UTM instrument with a grip gap of 50 mm and pulled at a tensile rate of 5 mm/min to break, and the strength at the breakage was measured as the tensile strength, and the elongation (%) of each of the surface protection layer and the stretching auxiliary layer in the MD direction may be calculated by dividing a grip gap at the breakage by the grip gap (50 mm) before the stretching and then multiplying the result by 100.

A tensile strength (N/15 mm) in the TD direction of each of the surface protection layer and the stretching auxiliary layer, according to the present invention, may be measured in a way of cutting out each of the surface protection layer and the stretching auxiliary layer into a length (MD direction) x width (TD direction) of 15 mm x 120 mm, then fixing the cut-out to a UTM instrument with a grip gap of 50 mm, pulling the cut-out at a tensile rate of 5 mm/min to break, and measuring the strength at the breakage, and the elongation (%) of each of the surface protection layer and the stretching auxiliary layer in the TD direction may be calculated by dividing a grip gap at the breakage by the grip gap (50 mm) before the stretching and then multiplying the result by 100.

As a result of repeated researches on a pouch film laminate capable of providing excellent robustness as well as excellent forming depth without defects such as breakage or pinholes, the present inventors found out that, by controlling the thickness ratio of the pouch film laminate to the surface protection layer in a particular range, the max forming depth of a cup part increases without defects such as breakage or pinholes occurring in the forming of the cup part, thereby providing a pouch film laminate with improved robustness, and the present inventors have completed the present invention.

Hereinafter, the present invention will be described in detail.

A pouch film laminate according to the present invention may include at least one of the components described below, and may include any combination thereof technically possible, among the components below.

### Pouch Film Laminate 100

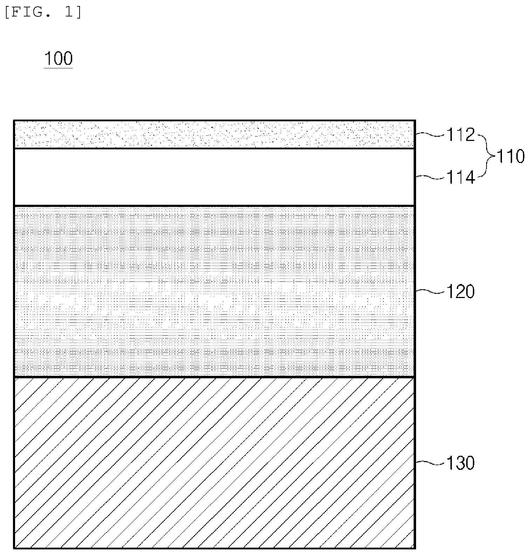

FIG. 1 is a cross-sectional view of a pouch film laminate 100 according to the present invention. Hereinafter, referring to FIG. 1, each component of the pouch film laminate 100 of the present invention is described in more detail.

Referring to FIG. 1, the pouch film laminate 100 according to the present invention is a pouch film laminate 100 including a substrate layer 110, a gas barrier layer 120, and a sealant layer 130 laminated in sequence, wherein the substrate layer 110 includes a surface protection layer 112, and a ratio of a thickness of the pouch film laminate 100 to a thickness of the surface protection layer 112 is 5 to 10.

A conventional art was intended to form a cup part of a pouch-type battery case in a large depth only by controlling the thickness and property of a nylon film that assists stretching and an aluminum alloy thin film that is used as a gas barrier layer in the pouch film laminate.

However, in case of forming the pouch film laminate to form the cup part, since not just the nylon film or gas barrier layer but all components included in the pouch film laminate stretch simultaneously, there are limitations in achieving excellent formability and robustness simply by controlling the nylon film and aluminum alloy thin film. In particular, since the surface protection layer included in the pouch film laminate does not have an appropriate softness comparable to the nylon film or aluminum alloy thin film, there is a problem of poor forming depth in the forming of the pouch film laminate, and if the appropriateness in the thickness ratio of the pouch film laminate to the surface protection layer is not taken into consideration, there is a problem of poor robustness as well as poor formability.

Therefore, by controlling the ratio of the thickness of the pouch film laminate to the thickness of the surface protection layer in a particular range, the pouch film laminate capable of providing more excellent formability and robustness may be provided.

According to an embodiment of the present invention, the ratio of the thickness of the pouch film laminate 100 to the thickness of the surface protection layer 112 may be 6 to 10, preferably 6.0 or greater, 6.5 or greater, 7.5 or greater, or 8.0 or greater, and 10 or less, 9.5 or less, or 9.0 or less, and more preferably, 8.0 to 9.0. When the ratio of the thickness of the pouch film laminate 100 to the thickness of the surface protection layer 112 is less than 6, flexibility of the pouch film laminate 100 is reduced, causing a problem of decreasing the max forming depth, and stress during the forming of the cup part fails to be appropriately distributed, causing a problem of generating wrinkles or cracks, and a problem of reducing the robustness. In addition, when the ratio of the thickness of the pouch film laminate 100 to the thickness of the surface protection layer 112 is greater than 10, the pouch film laminate 100 becomes vulnerable to moisture permeation from the outside, and to external impact, and since the stress is concentrated to the gas barrier layer 120 in the pouch film laminate 100 during the forming, the problem is that there is a high probability of cracks and wrinkles occurring in the cup part, particularly, the edge and corner areas of the cup part. Therefore, when the above ranges are satisfied, the ratio of the thickness of the pouch film laminate 100 to the thickness of the surface protection layer 112 is appropriate, so that tensile deformation does not occur easily, and thus a phenomenon of wrinkles may be prevented from occurring in the forming process, thereby increasing the forming depth and achieving excellent robustness. In addition, since the edge and/or corner is a portion where the tensile stress is concentrated and the stretching occurs the most during the forming of the pouch, the portion is formed thinner than other portions, and thus vulnerable to external impact, and therefore, when the above condition is satisfied, the thickness of the edge and/or corner may be prevented from becoming excessively thin, thereby providing more excellent robustness.

Hereinafter, each component will be described in more detail.

**(1) Substrate Layer 110**

The substrate layer 110 is formed on the outermost layer of the pouch film laminate 100 to protect a secondary battery from external friction and collision. The substrate layer 110 may be made of a polymer to electrically insulate an electrode assembly from the outside.

According to an embodiment of the present invention, the substrate layer 110 may have a composite film structure including two or more materials for respective layers. An adhesive layer may be additionally formed between the layers in the composite film structure. In addition, an adhesive layer may be additionally formed also between the gas barrier layer 120 to be described later and the substrate layer 110, and the substrate layer 110 may include the adhesive layer that bonds the gas barrier layer 120 to the substrate layer 110.

According to an embodiment of the present invention, the substrate layer 110 may include the surface protection layer 112, preferably further include a stretching auxiliary layer 114, and more preferably, further include the surface protection layer 112 and the stretching auxiliary layer 114. When the above condition is satisfied, it is desirable in that external insulation may be excellent, side reaction caused by external moisture may be prevented, and the formability of the pouch film laminate may be improved.

In this case, the surface protection layer 112 may be a layer disposed on the outermost layer of the pouch film laminate, and the stretching auxiliary layer 114 may be a layer disposed between the surface protection layer 112 and the gas barrier layer 120 to be described later. The surface protection layer 112 and the stretching auxiliary layer 114 may include materials of different quality and/or property. An interface may be present between the surface protection layer 112 and the stretching auxiliary layer 114. This means that the surface protection layer 112 and the stretching auxiliary layer 114 are different layers from each other, and may be formed separately from each other.

Hereinafter, the surface protection layer 112 and the stretching auxiliary layer 114 are described in detail.

**1) Surface Protection Layer 112**

The surface protection layer 112 may be a layer disposed on the outermost layer of the pouch film laminate as previously described. In this case, the surface protection layer 112 may perform a role of preventing moisture permeation from the outside of the pouch.

According to an embodiment of the present invention, the surface protection layer 112 may include one or more materials selected from the group consisting of polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, Teflon, and a glass fiber. Preferably, the surface protection layer 112 may include a polyester-based film having wear resistance and heat resistance. For example, the surface protection layer 112 may include at least one selected from the group consisting of polyethylene terephthalate, polybutylene terephthalate, and polyethylene naphthalate, but is not limited thereto.

As needed, the surface protection layer 112 may include an additive. By including the additive in the surface protection layer 112, property of the surface protection layer 112 may be changed. For example, as an additive for controlling tensile strength of the surface protection layer 112, at least one of a carbon fiber, a glass fiber, or an aramid fiber may be added. In case that such additive is included in the surface protection layer, effects of improving mechanical strength and further improving elongation may be obtained.

According to an embodiment of the present invention, the surface protection layer 112 may have a maximum peak temperature of 253 °C or less in a differential scanning calorimetry (DSC) analysis graph obtained by heating from 25 °C to 350 °C at a temperature increase rate of 10 °C /min. Preferably, the temperature may be 220 °C or higher, 225 °C or higher, 230 °C or higher, 235 °C or higher, 240 °C or higher, or 245 °C or higher, and 253 °C or lower, 252 °C or lower, 251 °C or lower, 250 °C or lower, or 249 °C or lower, and more preferably, 245 °C to 249 °C. In the differential scanning calorimetry (DSC) analysis graph of the surface protection layer 112, the maximum peak temperature may be a property indicating flexibility or softness of the surface protection layer 112. When the maximum peak temperature is higher than 253 °C, the softness of the surface protection layer 112 is not comparable to the flexibility of a nylon film or aluminum alloy thin film, causing a problem of cracks or pinholes occurring during the forming of the pouch film laminate. Therefore, when the temperature falls within the above ranges, the surface protection layer 112 may block moisture from the outside and provide adequate protection against external impact, and at the same time, may have appropriate softness, thereby achieving excellent formability. At this time, the maximum peak temperature may refer to a peak melting temperature.

In the differential scanning calorimetry (DSC) analysis graph of the surface protection layer 112, the maximum peak temperature may be controlled in various methods, which may be controlled according to, for example, composition of the surface protection layer 112, the type of an additive included in the surface protection layer 112, and the like, preferably, the maximum peak temperature may be controlled by changing the composition of the surface protection layer 112, and more preferably, may be controlled by appropriately adjusting the molar ratio of an ethylene glycol-derived structure and a butylene glycol-derived structure included in the surface protection layer 112.

According to an embodiment of the present invention, a friction coefficient of the surface protection layer 112, measured at a temperature of 25 °C, may be 0.3 or less, preferably 0.01 or greater, 0.02 or greater, 0.03 or greater, 0.04 or greater, 0.05 or greater, 0.06 or greater, or 0.07 or greater, and 0.3 or less, 0.25 or less, 0.20 or less, 0.15 or less, 0.13 or less, 0.11 or less, or 0.10 or less, and more preferably 0.07 to 0.10. When the friction coefficient falls within the above ranges, due to appropriate friction and softness, excellent formability may be achieved.

According to an embodiment of the present invention, the surface protection layer 112 may include a polyester-based film, preferably include a polyester-based resin containing an ethylene glycol-derived structure, a butylene glycol-derived structure, and a terephthalic acid-derived structure, and more preferably, the polyester-based resin may include an ethylene terephthalate structure and a butylene terephthalate structure in its main chain. When the above conditions are satisfied, the surface protection layer 112 may have excellent chemical resistance and heat resistance, and also have improved elongation and/or softness, thereby achieving excellent formability.

According to an embodiment of the present invention, a molar ratio of the ethylene glycol-derived structure and the butylene glycol-derived structure, included in the polyester-based resin, may be 80:20 to 95:5, preferably 82:18 to 90:10, and more preferably 83 :17 to 89:11. At this time, the ethylene glycol-derived structure and the butylene glycol-derived structure may be ethylene terephthalate and butylene terephthalate, respectively. When the ethylene glycol-derived structure and the butylene glycol-derived structure are included in the polyester-based resin in the above molar ratio, the softness of the surface protection layer 112 may increase and the formability of the pouch film laminate 100 may be improved, and also, the heat resistance and chemical resistance of the pouch film laminate 100 may be maintained.

A preparation method for the polyester-based resin is not particularly limited, and the polyester-based resin may be prepared in a method known in the relevant art, for example, a terephthalic acid (TPA) method by reaction of a mixture of ethylene glycol and butylene glycol with terephthalic acid, or a dimethyl terephthalate (DMT) method by reaction of a mixture of ethylene glycol and butylene glycol and dimethyl terephthalate.

According to an embodiment of the present invention, the polyester-based resin may be a result material of, for example, esterification reaction and condensation polymerization reaction between the mixture of ethylene glycol and butylene glycol and at least one selected from the group consisting of dimethyl terephthalate and terephthalic acid.

According to an embodiment of the present invention, the surface protection layer 112 may include an additive. By including the additive in the surface protection layer 112, property of the surface protection layer 112 may be changed. For example, as an additive for controlling the tensile strength of the surface protection layer 112, at least one of a carbon fiber, a glass fiber, or an aramid fiber may be added.

According to an embodiment of the present invention, the surface protection layer 112 may have a thickness of 10 µm to 35 µm, preferably 20 µm to 30 µm, more preferably, 22 µm to 28 µm, and further more preferably, 24 µm to 26 µm. When the pouch film laminate 100 is formed, with the thickness falling within the above ranges, such that each of the layers in the pouch film laminate 100 stretches, the surface protection layer 112 may have excellent mechanical property such as tensile strength and elongation, and may thus move in a similar way with the stretching auxiliary layer 114, the gas barrier layer 120, and/or the sealant layer 130 to be described later, thereby achieving excellent formability, and since the durability is strengthened in a structure requiring deep drawing with pressure applied, the problems of tearing or wrinkles, occurring on the film during the formation, may be prevented.

## 2) Stretching Auxiliary Layer 114

According to an embodiment of the present invention, the substrate layer 110 may further include a stretching auxiliary layer 114. The stretching auxiliary layer 114 may be a layer disposed between the surface protection layer 112 and the gas barrier layer 120, as previously described. In this case, the stretching auxiliary layer 114 may have similar stretching property with the gas barrier layer 120, and thus difference in stretching property between the surface protection layer 112 and the gas barrier layer 120 may be reduced, thereby improving the formability of a pouch.

According to an embodiment of the present invention, the stretching auxiliary layer 114 may include a polyamide-based film. For example, the stretching auxiliary layer 114 may include at least one selected from the group consisting of nylon 6,6, nylon MXD6 (polyxylylene adipamide), nylon 4, nylon 4,6, and nylon 4,10, but is not limited thereto. Preferably, in order to have a melting temperature of 240 °C or higher, the stretching auxiliary layer 114 may include nylon 6,6 and/or nylon MXD6.

According to an embodiment of the present invention, the stretching auxiliary layer 114 may include a metal oxide particle. The metal oxide particle may be hydroxylated by reaction with moisture introduced to the stretching auxiliary layer 114, to thereby removing the moisture in the stretching auxiliary layer 114. The metal oxide particle may include at least one selected from the group consisting of CaO, MnO, SrO, MgO, and ZnO. Preferably, the metal oxide particle may include at least one of CaO or MgO which is advantageous in hydroxylation with moisture.

According to an embodiment of the present invention, the stretching auxiliary layer 114 may further include an additive. By including the additive in the stretching auxiliary layer 114, property of the stretching auxiliary layer 114 may be changed. For example, as an additive for controlling the tensile strength of the stretching auxiliary layer 114, at least one of a carbon fiber, a glass fiber, or an aramid fiber may be added.

According to an embodiment of the present invention, the stretching auxiliary layer 114 may have a thickness of 20 µm to 45 µm, preferably 20 µm to 30 µm, more preferably 22 µm to 28 µm, and further more preferably, 24 µm to 26 µm. When the thickness of the stretching auxiliary layer 114 falls within the above numerical ranges, mechanical property of the stretching auxiliary layer may be similar with that of the gas barrier layer, so that a larger forming depth may be achieved when the pouch film laminate is formed.

According to an embodiment of the present invention, a ratio of a tensile strength of the stretching auxiliary layer 114 in the MD direction to a tensile strength of the surface protection layer 112 in the MD direction may be 0.9 to 1.1, preferably 0.95 to 1.05, and more preferably 0.98 to 1.02. When the tensile strength ratio in the MD direction of the stretching auxiliary layer 114 to the surface protection layer 112 falls within the above ranges, difference in mechanical property between the surface protection layer 112 and the stretching auxiliary layer 114 may be reduced, and thus, breakage and pinholes, occurring due to the difference in property between the layers during the forming of a pouch, may be prevented, thereby improving the formability of the pouch.

According to an embodiment of the present invention, a ratio of a tensile strength of the stretching auxiliary layer 114 in the TD direction to a tensile strength of the surface protection layer 112 in the TD direction may be 0.9 to 1.1, preferably 0.95 to 1.05, and more preferably 0.98 to 1.02. When the tensile strength ratio in the TD direction of the stretching auxiliary layer 114 to the surface protection layer 112 falls within the above ranges, difference in mechanical property between the surface protection layer 112 and the stretching auxiliary layer 114 may be reduced, and thus, breakage and pinholes, occurring due to the difference in property between the layers during the forming of a pouch, may be prevented, thereby improving the formability of the pouch.

According to an embodiment of the present invention, a ratio of an elongation of the stretching auxiliary layer 114 in the MD direction to an elongation of the surface protection layer 112 in the MD direction may be 0.9 to 1.1, preferably 0.95 to 1.05, and more preferably 0.98 to 1.02. When the elongation ratio in the MD direction of the stretching auxiliary layer 114 to the surface protection layer 112 falls within the above ranges, difference in tensile property between the laminated-structure layers may be reduced, and thus, both films are deformed uniformly in the drawing, thereby preventing wrinkles caused by excessive shrinkage or expansion, and since concentration of stress that may occur on a film interface during the formation is reduced, peeling of a layer may be prevented.

According to an embodiment of the present invention, a ratio of an elongation of the stretching auxiliary layer 114 in the TD direction to an elongation of the surface protection layer 112 in the TD direction may be 0.9 to 1.1, preferably 0.95 to 1.05, and more preferably 0.98 to 1.02. When the elongation ratio in the TD direction of the stretching auxiliary layer 114 to the surface protection layer 112 falls within the above ranges, difference in tensile property between the laminated-structure layers may be reduced, and thus, both films are deformed uniformly in the drawing, thereby preventing wrinkles caused by excessive shrinkage or expansion, and since concentration of stress that may occur on a film interface during the formation is reduced, peeling of a layer may be prevented.

According to an embodiment of the present invention, the tensile strength in the MD direction of the surface protection layer 112 may be 66 N/15 mm to 95 N/15 mm, preferably 70 N/15 mm to 90 N/15 mm, and more preferably 76 N/15 mm to 84 N/15 mm. When the tensile strength of the surface protection layer 112 in the MD direction falls within the above ranges, improvement effect on fatigue and puncture resistance after forming of a cup may be improved, and even if a tensile load exceeding a certain level is applied onto a pouch for forming of the pouch, problems such as breakage of the pouch film laminate 100 or occurrence of pinholes may be prevented.

According to an embodiment of the present invention, the tensile strength of the stretching auxiliary layer 114 in the MD direction may be 70 N/15 mm to 90 N/15 mm, preferably 72 N/15 mm to 88 N/15 mm, and more preferably 75 N/15 mm to 85 N/15 mm. When the tensile strength of the stretching auxiliary layer 114 in the MD direction falls within the above ranges, improvement effect on fatigue and puncture resistance, after forming of a cup, may be improved, and even if a tensile load exceeding a certain level is applied onto a pouch for forming of the pouch, problems such as breakage of the pouch film laminate 100 or occurrence of pinholes may be prevented.

According to an embodiment of the present invention, a tensile strength of the surface protection layer 112 in the TD direction may be 76 N/15 mm to 105 N/15 mm, preferably 81 N/15 mm to 100 N/15 mm, and more preferably 86 N/15 mm to 95 N/15 mm. When the tensile strength of the surface protection layer 112 in the TD direction falls within the above ranges, improvement effect on fatigue and puncture resistance, after forming of a cup, may be improved, and even if a tensile load exceeding a certain level is applied onto a pouch for forming of the pouch, problems such as breakage of the pouch film laminate 100 or occurrence of pinholes may be prevented.

According to an embodiment of the present invention, a tensile strength of the stretching auxiliary layer 114 in the TD direction may be 80 N/15 mm to 100 N/15 mm, preferably 82 N/15 mm to 98 N/15 mm, and more preferably 85 N/15 mm to 95 N/15 mm. When the tensile strength of the stretching auxiliary layer 114 in the TD direction falls within the above ranges, improvement effect on fatigue and puncture resistance, after forming of a cup, may be improved, and even if a tensile load exceeding a certain level is applied onto a pouch for forming of the pouch, problems such as breakage of the pouch film laminate 100 or occurrence of pinholes may be prevented.

According to an embodiment of the present invention, the elongation of the surface protection layer 112 in the MD direction may be 105% to 137%, preferably 110% to 130%, and more preferably 114% to 126%. When the elongation of the surface protection layer 112 in the MD direction falls within the above ranges, the gas barrier layer may be held tightly, thereby having an improvement effect on the formability.

According to an embodiment of the present invention, the elongation of the stretching auxiliary layer 114 in the MD direction may be 110% to 130%, preferably 112% to 127%, and more preferably 115% to 125%. When the elongation of the stretching auxiliary layer 114 in the MD direction falls within the above ranges, the gas barrier layer may be held tightly, thereby having an improvement effect on the formability.

According to an embodiment of the present invention, the elongation of the surface protection layer 112 in the TD direction may be 114% to 147%, preferably 120% to 140%, and more preferably 124% to 137%. When the elongation of the surface protection layer 112 in the TD direction falls within the above ranges, the gas barrier layer may be held tightly, thereby having an improvement effect on the formability.

According to an embodiment of the present invention, the elongation of the stretching auxiliary layer 114 in the TD direction may be 120% to 140%, preferably 122% to 138%, and more preferably 125% to 135%. When the elongation of the stretching auxiliary layer 114 in the TD direction falls within the above ranges, the gas barrier layer may be held tightly, thereby having an improvement effect on the formability.

Since the tensile strength and the elongation in the MD direction and TD direction of the surface protection layer 112 and the stretching auxiliary layer 114 may vary according to the type of a layer, the thickness of a layer, and/or the thickness of an adhesive layer, the type of a layer, the thickness of a layer, and/or the thickness of the adhesive layer may be appropriately controlled, so that the surface protection layer 112 and the stretching auxiliary layer 114 with a desired tensile strength and elongation may be formed.

According to an embodiment of the present invention, the substrate layer 110 may have a composite film structure including two or more materials for respective layers. An adhesive layer may be additionally formed between the layers in the composite film structure. The adhesive layer may be formed by applying a generally-used adhesive in the present invention, for example a urethane-based adhesive. For example, in case that the substrate layer 110 includes the surface protection layer 112 and/or the stretching auxiliary layer 114, an adhesive layer disposed between the surface protection layer 112 and the stretching auxiliary layer 114 may be additionally formed, and an adhesive layer disposed between the substrate layer 110 and the gas barrier layer 120 may be additionally formed. At this time, the adhesive layer may have a thickness of 1 μm to 8 μm, preferably of 1 μm to 5 μm, and more preferably, of 2 μm to 4 μm.

The substrate layer 110 may have a thickness of 45 μm to 70 μm, preferably of 45 μm to 60 μm, and more

preferably, of 45 $\mu$m to 58 $\mu$m. When the thickness of the substrate layer 110 falls within the above ranges, external insulation may be excellent, and damage on the substrate layer during the formation may be prevented to provide excellent formability, and at the same time, since the total thickness of the pouch is not large, energy density per volume of a secondary battery may be excellent. At this time, the thickness of the substrate layer 110 may include the thickness of the adhesive layer that may be included in the substrate layer 110, and also include that of an adhesive layer that bonds the gas barrier layer 120 and the substrate layer 110. When the thickness of the substrate layer 110 is a thickness including the adhesive layer in the substrate layer 110 and also including the adhesive layer that bonds the gas barrier layer 120 and the substrate layer 110, as previously described, more clear effect may be achieved.

## (2) Gas Barrier layer 120

The gas barrier layer 120 is laminated between the substrate layer 110 and the sealant layer 130 to secure mechanical strength of a pouch, and block access of gas or moisture from the outside of a secondary battery, and to prevent electrolyte leakage from the inside of a pouch-type battery case.

According to an embodiment of the present invention, the gas barrier layer 120 may have a thickness of 70 $\mu$m to 90 $\mu$m, preferably of 75 $\mu$m to 85 $\mu$m, and more preferably of 78 $\mu$m to 82 $\mu$m. When the thickness falls within the above ranges, formability of the gas barrier layer may be improved, so that the depth of a cup part may be formed large in drawing of a pouch film laminate, the outer wall of the cup part may become close to vertical, and the radius of curvature of a corner of the cup part may decrease. Accordingly, since the volume of an accommodating part increases, more electrode assemblies may be stacked on an electrode assembly accommodated therein, and energy efficiency per volume may be improved. In addition, the total thickness of the pouch may not increase significantly without decrease in the thickness of a sealant layer while there is no significant increase in the cost of preparation, and the sealing durability may not be reduced. Furthermore, after forming of the pouch, the gas barrier layer may remain in an appropriate amount, thereby improving robustness of the pouch.

According to an embodiment of the present invention, the gas barrier layer 120 may include metal. For example, the gas barrier layer may be a metal thin film including one or more metals selected from the group consisting of aluminum (Al), copper (Cu), stainless steel (SUS), nickel (Ni), titanium (Ti), and Invar, but is not limited thereto.

According to an embodiment of the present invention, the gas barrier layer 120 may be made of an aluminum alloy thin film. In case of forming the gas barrier layer 120 using the aluminum alloy thin film, light weight as well as mechanical strength exceeding a certain level may be secured, and supplementation for electrochemical property related to an electrode assembly and an electrolyte, heat dissipation, and the like may be secured. The aluminum alloy thin film may include an element other than aluminum (Al). For example, the aluminum alloy thin film may include one or more selected from the group consisting of iron (Fe), copper (Cu), chrome (Cr), manganese (Mn), nickel (Ni), magnesium (Mg), silicon (Si), and zinc (Zn).

In another embodiment, the gas barrier layer 120 may be made of a stainless-steel thin film. In particular, the gas barrier layer 120 may be prepared by forming and/or processing the stainless-steel thin film. The gas barrier layer 120 made of stainless steel, which has a relatively low thermal conductivity, may be effective in preventing or delaying thermal diffusion to another cell in case of thermal runaway, and due to relatively high toughness, occurrence of cracks on a pouch may be suppressed during the use of a pouch-type battery. Stainless steel may include one or more selected from the group consisting of an element other than iron (Fe), for example, copper (Cu), chrome (Cr), manganese (Mn), nickel (Ni), magnesium (Mg), silicon (Si), and zinc (Zn).

## (3) Sealant Layer

When the pouch-type battery case accommodating an electrode assembly therein is sealed, the sealant layer 130 may be thermally bonded to a sealing part to completely seal the inside the pouch-type battery case. For this, the sealant layer 130 may be made of a material having excellent thermal bonding strength.

According to an embodiment of the present invention, the sealant layer 130 may be made of a material having insulation, corrosion resistance, and sealing property. Preferably, the sealant layer 130 may be made of a material having insulation and corrosion resistance as it is directly in contact with an electrode assembly and/or an electrolyte inside the pouch-type battery case. In addition, since the sealant layer 130 needs to completely seal the inside of the pouch-type battery case to block movement of a material between the inside/outside, the sealant layer 130 may be made of a material having high sealing property (for example, excellent thermal bonding strength). In order to secure the insulation, corrosion resistance, and sealing property, the sealant layer 130 may be made of a polymer material.

According to an embodiment of the present invention, the sealant layer 130 may include one or more materials selected from the group consisting of polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, Teflon, and a glass fiber, and preferably, include a polyolefin-based resin such as polypropylene (PP) and/or polyethylene (PE). In this case, polypropylene may include cast polypropylene (CPP), acid modified polypropylene (PPa), a polypropylene-ethylene copolymer, and/or a polypropylene-butylene-ethylene ternary copolymer.

According to an embodiment of the present invention, the sealant layer 130 may have a thickness of 70 $\mu$m to 90 $\mu$m, preferably of 75 $\mu$m to 85 $\mu$m, and more preferably of 78 $\mu$m to 82 $\mu$m. When the thickness of the sealant layer falls within the above ranges, there are effects of securing formability of the pouch film laminate as well as securing sealing strength for the sealing part.

According to an embodiment of the present invention, the sealant layer 130 may include a first sealant layer disposed in contact with the gas barrier layer 120, a second sealant layer laminated on the first sealant layer, and a third sealant layer laminated on the second sealant layer.

According to an embodiment of the present invention, the first sealant layer may include polypropylene, and preferably include acid modified polypropylene (PPa) in order to secure long-term adhesion performance between the gas barrier layer and the first sealant layer. Here, the acid modified polypropylene may be maleic anhydride polypropylene (MAH PP) .

According to an embodiment of the present invention, the second sealant layer may be made of a material having insulation, corrosion resistance, and sealing property. Preferably, the second sealant layer may be made of one or more materials selected from the group consisting of polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, Teflon, and a glass fiber. Preferably, the second sealant layer may be made of a polyolefin-based resin such as polypropylene (PP) and/or polyethylene (PE). In this case, polypropylene may include cast polypropylene, acid modified polypropylene, a polypropylene-ethylene copolymer, and/or a polypropylene-butylene-ethylene ternary copolymer. Here, the acid modified polypropylene may be maleic anhydride polypropylene (MAH PP). More preferably, the second sealant layer may include the cast polypropylene (CPP) having thermal sealing property and high tensile strength.

According to an embodiment of the present invention, the third sealant layer may include polypropylene, preferably include a polypropylene random copolymer, more preferably include one or more selected from the group consisting of an ethylene-propylene random copolymer and a butene-propylene random copolymer, and further more preferably include an ethylene-propylene random copolymer. When the above conditions are satisfied, due to high melt flow rate (MFR) and low melting point, a sealing thickness to be achieved may be quickly reached when the same calories are applied. Accordingly, without increasing the sealing temperature, duration of the sealing may be reduced, compared to the case where a polypropylene homo copolymer is included, and duration of a process for a secondary battery may be reduced, thereby improving productivity and processibility, and at the same time, due to high thermal bonding strength, the pouch-type battery case may have excellent sealing property.

According to an embodiment of the present invention, the pouch film laminate 100 may have a thickness of 120 $\mu$m to 300 $\mu$m, preferably of 160 $\mu$m to 250 $\mu$m, more preferably of 185 $\mu$m to 240 $\mu$m, and further more preferably 200 $\mu$m to 230 $\mu$m. When the thickness of the pouch film laminate falls within the above ranges, reduction of a space for accommodating the battery due to the increase in thickness of the pouch film laminate, decrease in sealing durability, etc. may be minimized, and at the same time, the forming depth may be increased.

According to an embodiment of the present invention, the pouch film laminate 100 may have a max forming index A (MFI$_A$), represented by Equation 1 below, of 15 or greater.

$$[\text{Equation 1}]$$

$$\text{Max forming index A(MFI}_A) = (\text{PT/AT}) \times \text{TS}$$

In Equation 1 above, PT is a value of the thickness ($\mu$m) of the surface protection layer, AT is a value of the thickness ($\mu$m) of the pouch film laminate, and TS is a value of the tensile strength (N/15 mm) of the pouch film laminate.

Preferably, the max forming index A (MFI$_A$), represented by Equation 1 above, of the pouch film laminate 100 may be 15 or greater, 18 or greater, 20 or greater, 22 or greater, 24 or greater, 26 or greater, 27 or greater, 28 or greater, 29 or greater, 30 or greater, or 30.2 or greater, and 51 or less, 45 or less, 40 or less, 38 or less, 37 or less, 36 or less, 35 or less, or 34.0 or less, and more preferably, 30.2 to 34.0. The max forming index A (MFI$_A$) is a product of the thickness ratio of the surface protection layer to the pouch film laminate and the tensile strength of the pouch film laminate. When the max forming index A (MFI$_A$) is controlled in an appropriate range, the ratio of the thickness of the surface protection layer to the total thickness of the pouch film laminate and the tensile strength of the pouch film laminate may be appropriately combined, thereby sufficiently increasing the forming depth of the cup part during the formation and improving the robustness of a pouch. In addition, it may be desirable in that occurrence of wrinkles may be suppressed during the forming of the pouch.

According to an embodiment of the present invention, the substrate layer 110 may further include the stretching auxiliary layer 114, and the pouch film laminate 100 may have a max forming index B ($MFI_B$), represented by Equation 2 below, of 45 or greater.

$$[Equation\ 2]$$

$$Max\ forming\ index\ B\ (MFI_B)\ =\ \{(PT+NT)/(AT)\}\ \times\ TS$$

In Equation 2 above, PT is a value of the thickness ($\mu$m) of the surface protection layer, NT is a value of the thickness ($\mu$m) of the stretching auxiliary layer, AT is a value of the thickness ($\mu$m) of the pouch film laminate, and TS is a value of the tensile strength (N/15 mm) of the pouch film laminate.

Preferably, the max forming index B ($MFI_B$), represented by Equation 2 above, may be 45 or greater, 46 or greater, 47 or greater, 48 or greater, 50 or greater, 51 or greater, 52 or greater, 53 or greater, 54 or greater, 55 or greater, 56 or greater, 57 or greater, 58 or greater, 59 or greater, 60 or greater, or 60.3 or greater, and 92 or less, 90 or less, 85 or less, 80 or less, 75 or less, 70 or less, 69 or less, 68 or less, or 67.0 or less, and more preferably, of 60.3 to 67.0. Equation 2 above represents a product of a value of the ratio of the sum of the thicknesses of the surface protection layer and the stretching auxiliary layer to the thickness of the pouch film laminate and a value of the tensile strength of the pouch film laminate. This may be a parameter considering the stretching auxiliary layer that affects the formability, which may be an appropriate parameter for achieving more excellent formability in addition to the max forming index A ($MFI_A$) according to Equation 1 previously described. When the above ranges are satisfied, it may be desirable in terms of implementing more excellent max forming depth.

According to an embodiment of the present invention, the elongation of the pouch film laminate 100 may be 65% to 120%, preferably 70% to 110%, and more preferably 75% to 100%. When the elongation falls within the above ranges, pouch stretching, occurring when the pouch film laminate and a mold fail to slip due to the friction therebetween, is not poor, so that the cup part may have an excellent forming depth and the robustness may be improved.

According to an embodiment of the present invention, the tensile strength of the pouch film laminate 100 may be 225 N/15 mm to 350 N/15 mm, preferably 225 N/15 mm or greater, 230 N/15 mm or greater, 235 N/15 mm or greater, 240 N/15 mm or greater, or 245 N/15 mm or greater, and 350 N/15 mm or less, 330 N/15 mm or less, 310 N/15 mm or less, or 290 N/15 mm or less, and more preferably 245 N/15 mm to 290 N/15 mm. When the above ranges are satisfied, the amount of pouch slips in response to stress applied to the pouch may increase during the forming of the pouch, and therefore, breakage or pinholes may not occur during the forming of the pouch, and the forming depth of the cup part may be improved. In addition, since the tensile strength of the pouch film laminate is not too high, the amount of pouch slips is appropriate, so that occurrence of wrinkles may be suppressed during the forming of the pouch, and since there is no excessive difference in length of the pouch film laminate before and after the forming of the pouch, the processibility may be excellent.

The tensile strength and the elongation of the pouch film laminate, previously described, may be measured by general methods, but in particular, may be measured through a UTM instrument. More particularly, the pouch film laminate may be cut into a length (MD direction) x width (TD direction) of 120 mm x 15 mm to prepare a sample, then the sample is cut so that the length direction of the sample matches the MD direction of the pouch film laminate, then the samples are fixed to the UTM instrument with a grip gap of 50 mm, then the samples are pulled to break at a tensile rate of 5 mm/min to measure the strength at the breakage as the tensile strength (N/15 mm), and the changed length at the breakage may be measured to obtain the elongation.

According to an embodiment of the present invention, a ratio of the thickness of the gas barrier layer 120 to the thickness of the surface protection layer 112 may be 2.5 to 3.3. Preferably, the ratio may be 2.50 or greater, 2.55 or greater, 2.60 or greater, 2.65 or greater, 2.70 or greater, 2.75 or greater, 2.80 or greater, 2.85 or greater. 2.90 or greater, 2.95 or greater, or 3.00 or greater, and 3.30 or less. More preferably, the ratio may be 3.00 to 3.30. When the ratio falls within the above ranges, the thicknesses of the surface protection layer 112 and the gas barrier layer 120 may be balanced, so that the tensile force may be evenly distributed making deformation smooth in the forming process, thereby securing a large forming depth and also providing excellent robustness and surface protection performance.

According to an embodiment of the present invention, a ratio of the thickness of the gas barrier layer 120 to the thickness of the substrate layer 110 may be 1.4 to 1.8, and preferably 1.4 to 1.7. When the ratio falls within the above ranges, cracks may be prevented during the formation, thereby securing large forming depth.

According to an embodiment of the present invention, the substrate layer 110 may further include the stretching auxiliary layer 114, and the ratio of the thickness of the stretching auxiliary layer 114 to the thickness of the surface protection layer 112 may be 1.2 or less, preferably 1.2 or less, 1.1 or less, or 1.05 or less, and 0.5 or greater, 0.6 or greater, 0.7 or greater, 0.8 or greater, or 0.9 or greater, and more preferably, 0.9 to 1.05. When the ratio falls within the above ranges, since the tensile stress is evenly distributed, the stress may not be concentrated on a particular portion, and thus, the film may stretch out evenly, and since the adhesive strength between two films is applied evenly, peeling between the layers may not occur, thereby improving formability and securing a large forming depth.

## Pouch-type Secondary Battery 200

Next, a pouch-type secondary battery 200 according to the present invention will be described.

The pouch-type secondary battery 200 according to the present invention includes a pouch-type battery case 210, prepared by performing a drawing on the pouch film laminate 100 previously described, and an electrode assembly 260 accommodated in the pouch-type battery case 210. Preferably, the pouch-type secondary battery 200 according to the present invention may include the pouch-type battery case 210 in which the electrode assembly 260 is accommodated, the pouch-type battery case 210 may be prepared by performing a drawing on the pouch film laminate 100, the pouch film laminate 100 may include a substrate layer 110 containing a surface protection layer 112, a gas barrier layer 120, and a sealant layer 130 that are laminated in sequence, and a ratio of the thickness of the pouch film laminate 100 to the thickness of the surface protection layer 112 may be 5 to 10.

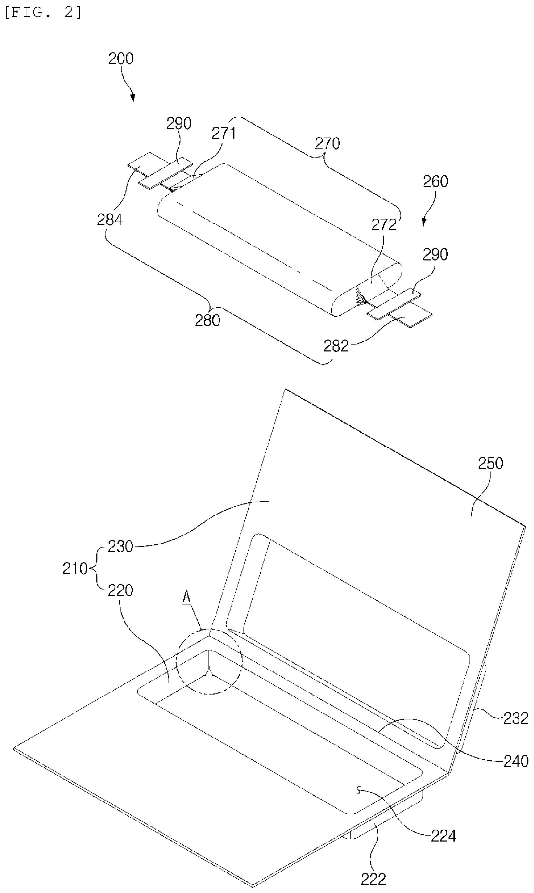

Hereinafter, referring to FIG. 2, each component of the pouch-type secondary battery of the present invention will be described in more detail.

FIG. 2 is an exploded diagram of a pouch-type secondary battery 200 according to the present invention. As illustrated in FIG. 2, the pouch-type secondary battery 200 of the present invention may include a pouch-type battery case 210, an electrode assembly 260, an electrode lead 280, an insulation part 290, and an electrolyte (not shown).

## (1) Pouch-Type Battery Case

The pouch-type battery case 210 may be prepared by performing a drawing on the pouch film laminate of the present invention previously described. The pouch-type battery case 210 may accommodate the electrode assembly 260 therein. Since detailed constitution and property of the pouch film laminate are same as previously described, detailed description thereof is omitted.

The pouch film laminate may be formed by drawing and stretching by a punch, etc., for preparing the pouch-type battery case 210. As a result, the pouch-type battery case 210 may include a cup part 222 and an accommodating part 224. The accommodating part 224 may be a space for accommodating an electrode assembly, which may refer to an accommodating space formed in the shape of a pouch inside the cup part 222 as the cup part 222 is formed.

According to an embodiment of the present invention, the pouch-type battery case 210 may include a first case 220 and a second case 230 as illustrated in FIG. 2. The first case 220 may include the accommodating part 224 capable of accommodating the electrode assembly 260, and the second case 230 may cover the accommodating part 224 from above such that the electrode assembly 260 does not escape outside the pouch-type battery case 210. The first case 220 and the second case 230 may be prepared in a way that one side of each is connected to each other, as illustrated in FIG. 2, but an embodiment is not limited thereto, and may be prepared in various ways, for example, each prepared separately.

According to another embodiment of the present invention, in case of forming a cup part on a pouch film laminate, two symmetrical cup parts 222 and 232 may be formed side by side by performing a drawing on one pouch film laminate. In this case, the cup parts 222 and 232 may be formed respectively on the first case 220 and the second case 230 as illustrated in FIG. 2. After the electrode assembly 260 is accommodated in the accommodating part 224 arranged in the cup part 222 of the first case 220, a bridge part 240, formed between the two cup parts 222 and 232, may be folded such that the two cup parts 222 and 232 face each other. In this case, the cup part 232 of the second case 230 may accommodate the electrode assembly 260 from above. Therefore, since the two cup parts 222 and 232 accommodate one electrode assembly 260, the electrode assembly 260 having a large thickness may be accommodated, compared to the case where one cup part 222 accommodates the electrode assembly. In addition, as the pouch-type battery case 210 is folded, one corner of the pouch-type secondary battery 200 may be formed, so that the number of corners to be sealed may be reduced when the sealing process is performed thereafter. Accordingly, the processing speed for the pouch-type secondary battery 200 may be improved, and the number of sealing processes may be reduced.

The pouch-type battery case 210 may be sealed in a state where the electrode assembly 260 is accommodated such that a part of an electrode lead 280 to be described later, which is a terminal part, is exposed. In particular, when the electrode lead 280 is connected to an electrode tab 270 of the electrode assembly 260, and an insulation part 290 is formed on a portion of the electrode lead 280, the electrode assembly 260 may be accommodated in the accommodating part 224 provided in the cup part 222 of the first case 220, and the second case 230 may cover the accommodating part 224 from above. Next, an electrolyte may be injected into the accommodating part 224, and a sealing part 250, formed on a boundary of the first case 220 and the second case 230, may be sealed.

The sealing part 250 may perform a role of sealing the accommodating part 224. In particular, the sealing part 250 may be formed along a boundary of the accommodating part 224 to seal the accommodating part 224. The temperature at which the sealing part 250 is sealed may be 180 °C to 250 °C, particularly, 200 °C to 250 °C, and more particularly 210 °C to 240 °C. When the sealing temperature falls within the above numerical ranges, the pouch-type battery case 210 may have sufficient sealing strength by thermal bonding.

The pouch-type battery case 210 according to the present invention may include the cup part 222 and 232 having a concave shape, and a terrace part 250 positioned on at least a portion of the perimeter of the cup part 222 and 232.

The cup part 222 and 232 may have the accommodating part 224 for accommodating the electrode assembly 260, and the terrace part 250 refers to a portion of the pouch film laminate 100 not formed, that is, a remaining region excluding the cup part 222 and 232.

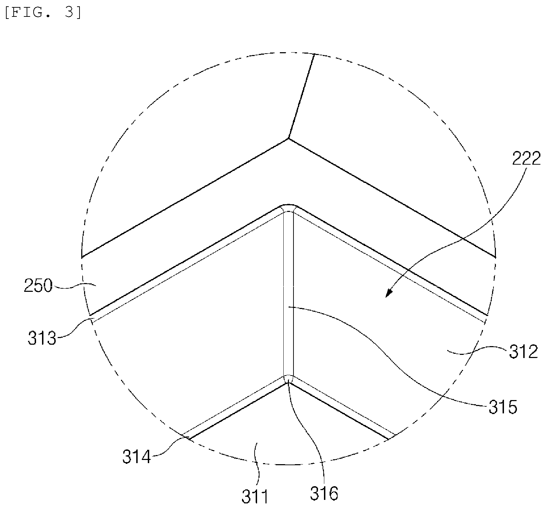

Referring to FIG. 3, the cup part 222 and 232 may include a bottom surface 311 and a perimeter surface 312. The perimeter surface 312 may connect the bottom surface 311 to the terrace part 250. The perimeter surface 312 may be included in plurality, and more particularly, four perimeter surfaces may be included.

The bottom surface 311 may cover one side of the electrode assembly 260, and the perimeter surface 312 may surround the perimeter of the electrode assembly 260. In addition, the cup part 222 and 232 may include a first edge 313 where the perimeter surface 312 and the terrace part 250 meet, a second edge 314 where the bottom surface 311 and the perimeter surface 312 meet, and a third edge 315 where one pair of perimeter surfaces 312 adjacent to each other meet among a plurality of perimeter surfaces 312. Each of the edges 313, 314, and 315 may be formed to be rounded with a predetermined radius of curvature.

In addition, the cup part 222 and 232 may include a corner 316 where one pair of perimeter surfaces 312 adjacent to each other, among the plurality of perimeter surfaces 312, and the bottom surface 311 meet. That is, the corner 316 may be a portion where a pair of the second edges 314 adjacent to each other and the third edge 315 overlap each other. The corner 316 may have a predetermined radius of curvature.

Since four perimeter surfaces 312 are provided in the cup part 222 and 232, each of the edges 313, 314, and 315, and the corner 316 may be formed in four.

According to an embodiment of the present invention, the pouch-type battery case 210 may have a barrier residual rate (BRR), represented by Equation 3 below, of 30% to 60%, preferably 30% to 50%, and more preferably 30% to 45%.

**6]** [Equation 3]

$$\text{Barrier residual rate (BRR)} = (LT \,/\, CT) \times 100$$

In Equation 1 above, LT is a value of the thickness ($\mu$m) of the gas barrier layer included in the corner of the cup part of the pouch-type battery case, and CT is a value of the thickness ($\mu$m) of the gas barrier layer included in the terrace part of the pouch-type battery case. Preferably, CT may be a value of the thickness ($\mu$m) of the gas barrier layer included in the pouch film laminate before the pouch-type battery case is prepared.

The barrier residual rate may be a ratio of the thickness of the gas barrier layer on cross-section of the corner in the cup part of the pouch-type battery case to the thickness of the gas barrier layer included in the pouch film laminate before the pouch-type battery case is prepared, and the ratio is an index indicating the robustness of the pouch-type battery case. For example, since the pouch-type battery case is prepared by performing a drawing on the pouch film laminate, a portion to be formed stretches, and in particular, the corner where the stretching stress is concentrated stretches the most, so that the portion is formed thinner than another portion, and is vulnerable to external impact. Therefore, when the barrier residual rate is low, there are problems that mechanical strength of the battery case may become weak, and breakage may occur easily by impact, so that the robustness of the pouch-type battery case may be checked through BRR represented by Equation 3 above. When the above ranges are satisfied, it may be desirable in that excellent max forming depth may be achieved while excellent mechanical strength may be achieved, and since the volume of the accommodating part 224 does not decrease excessively, energy density may be excellent.

According to an embodiment of the present invention, the thickness of the gas barrier layer 120 on the corner 316 portion may be 25 $\mu$m or greater, preferably 25 $\mu$m or greater, 26 $\mu$m or greater, 27 $\mu$m or greater, 28 $\mu$m or greater, 29 $\mu$m or greater, or 30 $\mu$m or greater, and 48 $\mu$m or less, 47 $\mu$m or less, 46 $\mu$m or less, 45 $\mu$m or less, 43 $\mu$m or less, 42 $\mu$m or less, or 41 $\mu$m or less, and more preferably 30 $\mu$m to 41 $\mu$m. The corner 316 is a portion where stretching stress is concentrated during the forming of the cup part, and since stretching occurs the most in the portion, the portion is formed thinner than another portion, and cracks or pinholes occur the most, so that the portion is vulnerable to external impact. In particular, in the forming of two cups, since pressure is applied by two punches in close proximity, the stress concentrated to the corner may increase further, having a tendency to make this problem worse. Therefore, when the above ranges are satisfied, occurrence of cracks may be suppressed, and damages due to external impact may be minimized.

Meanwhile, since the terrace part 250 is a region where the forming is not performed, the thickness of the gas barrier layer 120 on this region is almost the same as the thickness of the gas barrier layer 120 of the pouch film laminate 100 before the formation. Accordingly, the thickness of the gas barrier layer 120 in the terrace part 250 may be 70 $\mu$m to 90 $\mu$m, preferably 75 $\mu$m to 85 $\mu$m, and more preferably 78 $\mu$m to 82 $\mu$m.

Meanwhile, the radius of curvature of the corner 310 may be formed in 0.5 to 5.0 mm, preferably 1.0 to 4.0 mm, and more preferably 2.0 to 3.5 mm. The radius of curvature of the corner 316 may be a radius of curvature for an inner surface of the corner 316. When the radius of curvature of the corner 316 is too small, it may be difficult to maintain the thickness of the gas barrier layer 120 as 30 $\mu$m or larger at the corner, and when the radius of curvature is too large, the accommodating space in the cup part may be reduced to decrease the energy density.

## (2) Electrode Assembly

The electrode assembly 260 may be inserted in the pouch-type battery case 210 and is injected with an electrolyte, and then sealed by the pouch-type battery case 210.

The electrode assembly 260 may be formed by a positive electrode, a separator, and a negative electrode that are sequentially stacked. In particular, the electrode assembly 260 may include two types of electrodes which are the positive electrode and negative electrode, and the separator disposed between the electrodes in order to insulate the electrodes from each other.

The positive electrode and the negative electrode may each have a structure where an active material slurry is applied onto an electrode current collector in the form of a metal foil or metal mesh containing aluminum and copper, respectively. In general, the slurry may be formed by an active material in a particle form, an auxiliary conductor, a binder, and a conductive material being agitated with a solvent added. The solvent may be removed in the following process.

The slurry in which the electrode active material, the binder, and/or the conductive material are mixed is applied onto a positive electrode current collector and a negative electrode current collector to respectively prepare a positive electrode and a negative electrode, and the positive electrode and the negative electrode are stacked on respective sides of the separator to form the electrode assembly 260 in a certain shape. The type of the electrode assembly 260 may include a stack type, a jelly roll type, a stack and folding type, etc., but is not limited thereto.

The electrode assembly 260 may include an electrode tab 270.

The electrode tab 270 may be connected to each of the positive electrode and the negative electrode of the electrode assembly 260, and may protrude from the electrode assembly 260 to the outside to serve as a movement path of electrons between the inside and outside of the electrode assembly 260. The electrode current collector included in the electrode assembly 260 may include a portion applied with the electrode active material and an end portion not applied with the electrode active material that is a non-coated part. The electrode tab 270 may be formed by cutting the non-coated part, or formed by connecting a separate conductive member to the non-coated part through ultrasonic welding, etc. As illustrated in FIG. 2, the electrode tab 270 may protrude in different directions of the electrode assembly 260, but is not limited thereto, and may protrude in various directions, for example, protrude side by side in the same direction from one side.

## (3) Electrode Lead

The electrode lead 280 may supply electricity to the outside of the secondary battery 200. The electrode lead 280 may be connected to the electrode tab 270 of the electrode assembly 260 through spot welding, etc.

The electrode lead 280 may be connected to the electrode assembly 260, and via the sealing part 250 to protrude to the outside of the pouch-type battery case 210. In particular, one end of the electrode lead 280 may be connected to the electrode assembly 260, particularly to the electrode tab 270, and the other end of the electrode lead 280 may protrude to the outside of the pouch-type battery case 210.

The electrode lead 280 may include a positive electrode lead 282 connected to one end of a positive electrode tab 272 and extending in a direction in which the positive electrode tab 272 protrudes, and a negative electrode lead 284 connected to one end of a negative electrode tab 271 and extending in a direction in which the negative electrode tab 271 protrudes. The other end of each of the positive electrode lead 282 and the negative electrode lead 284 may protrude to the outside of the battery case 210. Therefore, electricity generated inside the electrode assembly 260 may be supplied to the outside. In addition, since the positive electrode tab 272 and the negative electrode tab 271 protrude in different directions, the positive electrode lead 282 and the negative electrode lead 284 may also extend in different directions. The positive electrode lead 282 and the negative electrode lead 284 may have different materials. That is, the positive electrode lead 282 may have an aluminum (Al) material same as that of the positive electrode current collector, and the negative electrode lead 284 may have a copper (Cu) material or a nickel (Ni)-coated copper material same as that of the negative electrode current collector. A portion of the electrode lead 280, protruding to the outside of the battery case 210, may become a terminal part which may be electrically connected to an external terminal.

## (4) Insulation Part

The insulation part 290 may prevent the electricity, generated from the electrode assembly 260, from flowing to the battery case 210 through the electrode lead 280, and maintain the sealing of the battery case 210. For this, the insulation part 290 may be formed as a non-conductor, which is nonconductive so that it does not conduct electricity well. In general, for the insulation part 290, a relatively thin insulating tape or film that is easy to adhere to the electrode lead 280 may be widely used, but the type is not limited thereto, and any member capable of insulating the electrode lead 280 may be used.

The insulation part 290 may be disposed surrounding the outer circumference of the electrode lead 280. In particular, at least a portion of the electrode lead 280 may be surrounded by the insulation part 290. In this case, the insulation part 290 may be disposed between the electrode lead 280 and the pouch-type battery case 210. The insulation part 290 may be positioned limited to the sealing part 250 where the first case 220 and the second case 230 of the pouch-type battery case 210 are thermally bonded, and may bond the electrode lead 280 to the battery case 210.

**(5) Electrolyte**

The pouch-type secondary battery 200 according to the present invention may further include an electrolyte (not shown) injected into the pouch-type battery case 210. The electrolyte is to move lithium ions generated by electrochemical reaction of an electrode when the secondary battery 200 is charged/discharged, and may include a non-aqueous organic electrolyte solution which is a mixture of a lithium salt and an organic solvent, or a polymer using a polymer electrolyte. Furthermore, the electrolyte may include a sulfide-based, an oxide-based, or a polymer-based solid electrolyte, and this solid electrolyte may have flexibility enabling easy deformation by external force.

Hereinafter, the present invention is described in more detail through particular examples. However, the following examples are only intended to help understanding of the present invention, and the scope of the present invention is not limited thereto. It is obvious to those skilled in the art that various changes and modifications are possible within the scope and technical spirit of the present description, and it is natural that such changes and modifications fall within the scope of the appended claims.

**Example and Comparative Example**

**Example 1: Preparation of Pouch Film Laminate**

A polyester-based film with a thickness of 25 $\mu$m, a first adhesive layer with a thickness of 3 $\mu$m, a nylon (Ny) film with a thickness of 25 $\mu$m, and a second adhesive layer with a thickness of 3 $\mu$m laminated in sequence were prepared as a substrate layer, an aluminum alloy thin film with a thickness of 80 $\mu$m was prepared as a gas barrier layer, and a sealant layer with a thickness of 80 $\mu$m was prepared as a sealant layer, and then the layers were laminated in sequence to prepare a pouch film laminate according to Example 1.

At this time, for the sealant layer, an acid modified polypropylene (PPa) film of 30 $\mu$m as a first sealant layer, a cast polypropylene (PP) film of 30 $\mu$m as a second sealant layer, and an ethylene-propylene random copolymer film of 20 $\mu$m as a third sealant layer were laminated in sequence on the basis of the layer close to the aluminum alloy thin film.

In addition, in case of the polyester-based film, a polyester-based film, prepared with a composition listed in Table 2 below, was used. In a preparation of a polyester resin used in a preparation of the polyester-based film, a terephthalic acid (TPA) method, which is a preparation method for polyethylene terephthalate by reaction between ethylene glycol and terephthalic acid, was applied, and as a raw material, ethylene glycol or a mixture of ethylene glycol and butylene glycol was used as listed in Table 1 below.

**Comparative Examples 1 to 3: Preparation of Pouch Film Laminate**

Pouch film laminates according to Comparative Examples 1 to 3 were prepared in the same method as that of Example 1, except that the thickness of each layer was controlled, or composition of the surface protection layer was controlled, as shown in Table 1 and Table 2 below.

[Table 1]

| | Thickness of each layer in substrate layer (μm) | | | | Thickness of gas barrier layer (μm) | Thickness of each layer in sealant layer (μm) | | | Thickness of pouch film laminate (μm) |
|---|---|---|---|---|---|---|---|---|---|
| | Surface protection layer | First adhesive layer | Stretching auxiliary layer | Second adhesive layer | | First sealant layer | Second sealant layer | Third sealant layer | |
| Example 1 | 25 | 3 | 25 | 3 | 80 | 30 | 30 | 20 | 216 |
| Comparative Example 1 | 12 | 3 | 15 | 3 | 40 | 40 | 0 | 40 | 153 |
| Comparative Example 2 | 12 | 3 | 25 | 3 | 60 | 30 | 30 | 20 | 183 |
| Comparative Example 3 | 40 | 3 | 25 | 3 | 80 | 40 | 0 | 40 | 231 |

[Table 2]

|  | Molar ratio of compounds in polyester film (surface protection layer) | |
| --- | --- | --- |
|  | Ethylene terephthalate | Butylene terephthalate |
| Example 1 | 84.5 | 15.5 |
| Comparative Example 1 | 100 | 0 |
| Comparative Example 2 | 100 | 0 |
| Comparative Example 3 | 84.5 | 15.5 |

**Experimental Example 1: Measurement of Tensile Strength and Elongation of Pouch Film Laminate**

Tensile strength and elongation of the pouch film laminate, prepared according to each of Example 1 and Comparative Examples 1 to 3, were measured.

The tensile strength and elongation of the pouch film laminate were measured using an UTM instrument, and particularly, the pouch film laminate was cut into a length (MD direction) x width (TD direction) of 120 mm x 15 mm to prepare a sample, then the sample was cut so that the length direction of the sample matches the MD direction of the pouch film laminate, then the samples were fixed to the UTM instrument at a grip gap of 50 mm, then the samples were pulled to break at a tensile rate of 5 mm/min to measure the strength at the breakage as the tensile strength (N/15 mm), and the changed length at the breakage was measured to obtain the elongation.

The measured tensile strength and elongation values were listed in Table 3 below.

[Table 3]

|  | Thickness of surface protection layer ($\mu$m) | Thickness of stretching auxiliary layer ($\mu$m) | Pouch film laminate | | | $MFI_A$ | $MFI_B$ |
| --- | --- | --- | --- | --- | --- | --- | --- |
|  |  |  | Thickness ($\mu$m) | Tensile strength (N/15 mm) | Elongation (%) |  |  |
| Example 1 | 25 | 25 | 216 | 287 | 76 | 33.2 | 66.4 |
| Comparative Example 1 | 12 | 15 | 153 | 142 | 87 | 11.1 | 25.1 |
| Comparative Example 2 | 12 | 25 | 183 | 217 | 73 | 14.2 | 43.9 |
| Comparative Example 3 | 40 | 25 | 231 | 300 | 85 | 51.9 | 84.4 |

**Experimental Example 2: Evaluation on Formability and Robustness of Pouch Film Laminate**

(1) Evaluation on Formability of Pouch Film Laminate

Formability of the pouch film laminate according to each of Example 1 and Comparative Examples 1 to 3 was evaluated.

In particular, as a method of evaluating the formability of the pouch film laminate, each of the pouch film laminates was cut into the same size of 665 mm (MD direction) x 400 mm (TD direction), then the forming depth at which cracks occur was identified by varying the forming depth in a two-cup forming device equipped with a die and a punch, and then was lowered by 0.5 mm therefrom to check if there was no defect when 10 cycles of forming were performed, and the depth was obtained as a max forming depth.

At this time, mold conditions for the two-cup forming device was as listed in Table 4 below.

[Table 4]

| Edge curvature (mm) | Punch (corner) | 0.5 (3.5) |
| --- | --- | --- |
|  | Die | 0.5 |
|  | Bridge | 0.5 |
| Corner curvature (mm) | Punch | 1.5 |
|  | Die | 2.5 |

(continued)

| Clearance (mm) | Bridge | 1 |
|---|---|---|
| | Side | 1 |
| Bridge (mm) | Width | 1 |
| Size (mm) | Punch | 513×95.65×2 |
| | Die | 515×97.65×2 |

The max forming depth measured as above was listed in Table 5 below.

(2) Evaluation on Robustness of Pouch Film Laminate

For the pouch-type battery case prepared in the evaluation on formability of the pouch film laminate, robustness of the pouch film laminate, according to each of Example 1 and Comparative Examples 1 to 3, was evaluated when the max forming depth was satisfied.

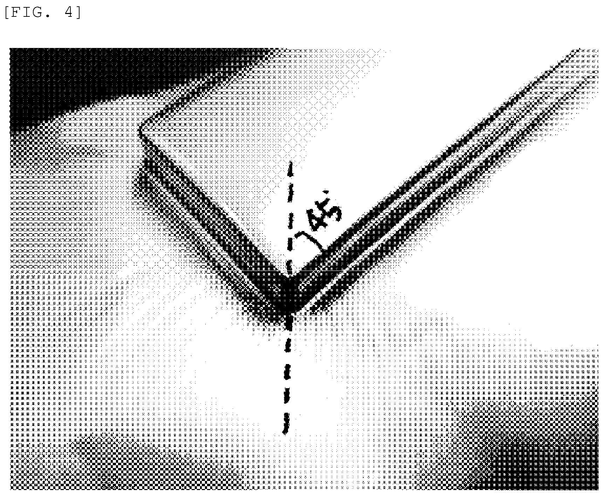

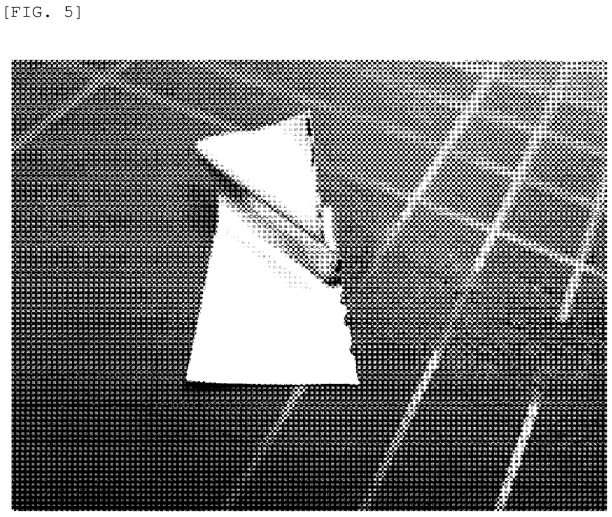

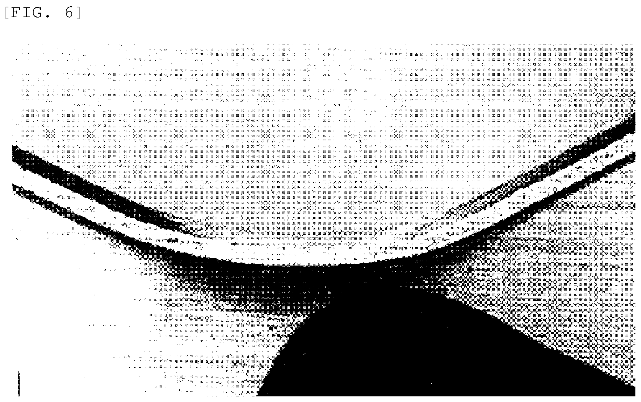

In particular, for the pouch-type battery case prepared in the evaluation on the formability of the pouch film laminate, when the max forming depth was satisfied, the corner was cut at 45° to prepare a sample as shown in FIGS. 4 to 6, then the cut cross-section of the sample was observed by a microscope to measure the thickness of a gas barrier layer at the corner where a bottom surface and a perimeter surface of a cup part were in contact with each other, and a ratio of the thickness of the gas barrier layer at the corner part after the cup part was formed to the thickness of the gas barrier layer before the formation was measured as a percentage.

The value was expressed as a barrier residual rate (BRR) represented by Equation 3 below, and listed in Table 5 below.

$$[Equation\ 3]$$

$$Barrier\ residual\ rate\ (BRR) = (LT\ /\ CT)\ \times\ 100$$

In Equation 1 above, LT is a value of the thickness ($\mu$m) of the gas barrier layer included on the corner in the cup part of the pouch-type battery case, and CT is a value of the thickness ($\mu$m) of the gas barrier layer included in the pouch film laminate before the pouch-type battery case is prepared.

[Table 5]

| | Ratio of thickness ($\mu$m) of pouch film laminate to thickness ($\mu$m) of surface protection layer | Max forming depth (mm) | Thickness of gas barrier layer on corner of cup part ($\mu$m) | Barrier residual rate (%) |
|---|---|---|---|---|
| Example 1 | 8.64 | 14.5 | 37 | 46 |
| Comparative Example 1 | 12.75 | 5.8 | 24 | 60 |
| Comparative Example 2 | 15.25 | 10.0 | 36 | 60 |
| Comparative Example 3 | 5.78 | 13.5 | 50 | 62 |

As listed in Table 5 above, in case of Example 1, it can be seen that the maximum formability and robustness were excellent, unlike the cases of Comparative Examples 1 to 3.

<Description of the Symbols>

100: Pouch film laminate

110: Substrate layer

| 112 | Surface protection layer |
|---|---|
| 114: | Stretching auxiliary layer |
| 120: | Gas barrier layer |
| 130: | Sealant layer |
| 200: | Pouch-type secondary battery |
| 210: | Pouch-type battery case |
| 220: | First case |
| 222: | Cup part |
| 224: | Accommodating part |
| 230: | Second case |
| 232: | Cup part |
| 240: | Bridge part |
| 250: | Terrace part |
| 260: | Electrode assembly |
| 270: | Electrode tab |
| 271: | Negative electrode tab |
| 272: | Positive electrode tab |
| 280: | Electrode lead |
| 282: | Positive electrode lead |
| 284: | Negative electrode lead |
| 290: | Insulation part |
| 311: | Bottom surface |
| 312: | Perimeter Surface |
| 313: | First edge |
| 314: | Second edge |
| 315: | Third edge |
| 316: | Corner |

**Claims**

1. A pouch film laminate comprising:

a substrate layer, a gas barrier layer, and a sealant layer laminated in sequence,
wherein the substrate layer comprises a surface protection layer, and
a ratio of a thickness of the pouch film laminate to a thickness of the surface protection layer is 6 to 10.

2. The pouch film laminate of claim 1, wherein the substrate layer has a thickness of 45 $\mu$m to 70 $\mu$m.

3. The pouch film laminate of claim 1, wherein the thickness of the surface protection layer is 10 $\mu$m to 35 $\mu$m.

4. The pouch film laminate of claim 1, wherein the surface protection layer has a maximum peak temperature of 253 °C or less in a differential scanning calorimetry (DSC) analysis graph obtained by heating from 25 °C to 350 °C at a temperature increase rate of 10 °C/min.

5. The pouch film laminate of claim 1, wherein the surface protection layer has a friction coefficient of 0.3 or less measured at a temperature of 25 °C.

6. The pouch film laminate of claim 1, wherein

the substrate layer further comprises a stretching auxiliary layer, and
the stretching auxiliary layer has a thickness of 20 $\mu$m to 45 $\mu$m.

7. The pouch film laminate of claim 1, wherein the gas barrier layer has a thickness of 70 $\mu$m to 90 $\mu$m.

8. The pouch film laminate of claim 1, wherein the sealant layer has a thickness of 70 $\mu$m to 90 $\mu$m.

9. The pouch film laminate of claim 1, wherein the sealant layer comprises a first sealant layer disposed in contact with the gas barrier layer, a second sealant layer laminated on the first sealant layer, and a third sealant layer laminated on the second sealant layer.

10. The pouch film laminate of claim 1, wherein the thickness of the pouch film laminate is 120 $\mu$m to 300 $\mu$m.

11. The pouch film laminate of claim 1, wherein a ratio of a thickness of the gas barrier layer to the thickness of the surface protection layer is 2.5 to 3.3.

12. The pouch film laminate of claim 1, wherein a ratio of a thickness of the gas barrier layer to a thickness of the substrate layer is 1.4 to 1.8.

13. The pouch film laminate of claim 1, wherein

the substrate layer further comprises a stretching auxiliary layer, and
a ratio of a thickness of the stretching auxiliary layer to the thickness of the surface protection layer is 1.2 or less.

14. A pouch-type battery case, prepared by performing a drawing on the pouch film laminate of claim 1.

15. A pouch-type secondary battery comprising the pouch-type battery case of claim 14.

[FIG. 1]

100

112 ⎫
114 ⎬ 110

120

130

[FIG. 2]

[FIG. 3]

[FIG. 4]

[FIG. 5]

[FIG. 6]

## INTERNATIONAL SEARCH REPORT

| International application No. |
|---|
| **PCT/KR2025/003533** |

| A. | CLASSIFICATION OF SUBJECT MATTER |
|---|---|

**H01M 50/133**(2021.01)i; **H01M 50/126**(2021.01)i; **H01M 50/124**(2021.01)i; **H01M 50/105**(2021.01)i; **H01M 50/121**(2021.01)i; **H01M 50/119**(2021.01)i; **H01M 50/136**(2021.01)i; **H01M 50/145**(2021.01)i; **H01M 50/131**(2021.01)i

According to International Patent Classification (IPC) or to both national classification and IPC

| B. | FIELDS SEARCHED |
|---|---|

Minimum documentation searched (classification system followed by classification symbols)

H01M 50/133(2021.01); H01M 2/02(2006.01); H01M 50/10(2021.01); H01M 50/105(2021.01); H01M 50/124(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 보호층(protection layer), 비율(ratio), 파우치(pouch), 마찰(friction), 실런트 (sealant), 가스 배리어(gas barrier)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2023-0145964 A (LG ENERGY SOLUTION, LTD.) 18 October 2023 (2023-10-18)<br>See paragraph [0053], claims 1-16 and figure 2. | 1-3,6,8-15 |
| Y | | 4,5,7 |
| Y | KR 10-2016-0090562 A (LG CHEM, LTD.) 01 August 2016 (2016-08-01)<br>See paragraphs [0033] and [0046]. | 4,7 |
| Y | KR 10-2019-0047104 A (TORAY ADVANCED FILM CO., LTD.) 07 May 2019 (2019-05-07)<br>See claim 7. | 5 |
| A | KR 10-2019-0086105 A (LG CHEM, LTD.) 22 July 2019 (2019-07-22)<br>See paragraph [0077]. | 1-15 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 June 2025** | **19 June 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2025/003533** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2017-0142624 A (BTL ADVANCED MATERIAL CO., LTD.) 28 December 2017 (2017-12-28)<br>See paragraphs [0034] and [0035]. | 1-15 |

Form PCT/ISA/210 (second sheet) (July 2022)

**INTERNATIONAL SEARCH REPORT**
Information on patent family members

International application No.

**PCT/KR2025/003533**

| Patent document cited in search report | | | Publication date (day/month/year) | Patent family member(s) | | | Publication date (day/month/year) |
|---|---|---|---|---|---|---|---|
| KR | 10-2023-0145964 | A | 18 October 2023 | CN | 113782878 | A | 10 December 2021 |
| | | | | CN | 215955369 | U | 04 March 2022 |
| | | | | EP | 4135105 | A1 | 15 February 2023 |
| | | | | EP | 4135105 | A4 | 11 December 2024 |
| | | | | JP | 2023-526609 | A | 22 June 2023 |
| | | | | JP | 2024-026624 | A | 28 February 2024 |
| | | | | JP | 7416979 | B2 | 17 January 2024 |
| | | | | KR | 10-2021-0152969 | A | 16 December 2021 |
| | | | | KR | 10-2611432 | B1 | 08 December 2023 |
| | | | | US | 2023-0207931 | A1 | 29 June 2023 |
| | | | | WO | 2021-251736 | A1 | 16 December 2021 |
| KR | 10-2016-0090562 | A | 01 August 2016 | KR | 10-1852662 | B1 | 26 April 2018 |
| KR | 10-2019-0047104 | A | 07 May 2019 | CN | 109952202 | A | 28 June 2019 |
| | | | | CN | 109952202 | B | 05 May 2020 |
| | | | | JP | 6548746 | B2 | 24 July 2019 |
| | | | | KR | 10-2040536 | B1 | 06 November 2019 |
| | | | | TW | 201825564 | A | 16 July 2018 |
| | | | | TW | I736708 | B | 21 August 2021 |
| | | | | WO | 2018-088257 | A1 | 17 May 2018 |
| KR | 10-2019-0086105 | A | 22 July 2019 | CN | 110447121 | A | 12 November 2019 |
| | | | | CN | 110447121 | B | 22 March 2022 |
| | | | | EP | 3595030 | A1 | 15 January 2020 |
| | | | | EP | 3595030 | A4 | 06 May 2020 |
| | | | | EP | 3595030 | B1 | 21 April 2021 |
| | | | | JP | 2020-520834 | A | 16 July 2020 |
| | | | | JP | 7038952 | B2 | 22 March 2022 |
| | | | | KR | 10-2255537 | B1 | 25 May 2021 |
| | | | | PL | 3595030 | T3 | 04 October 2021 |
| | | | | US | 12107279 | B2 | 01 October 2024 |
| | | | | US | 2020-0044203 | A1 | 06 February 2020 |
| | | | | US | 2024-0421387 | A1 | 19 December 2024 |
| | | | | WO | 2019-139245 | A1 | 18 July 2019 |
| KR | 10-2017-0142624 | A | 28 December 2017 | None | | | |

Form PCT/ISA/210 (patent family annex) (July 2022)

**REFERENCES CITED IN THE DESCRIPTION**

**Patent documents cited in the description**

- KR 1020240037462
- KR 1020240037463
- KR 1020240196382
- KR 1020250034243